Europäisches Patentamt

European Patent Office

Office européen des brevets

(19)

(11) Numéro de publication : **0 268 513 B1**

(12) # FASCICULE DE BREVET EUROPEEN

(45) Date de publication du fascicule du brevet :
20.02.91 Bulletin 91/08

(51) Int. Cl.⁵ : **G06F 15/16**, G06F 13/40,
**G06F 15/76**

(21) Numéro de dépôt : **87402370.8**

(22) Date de dépôt : **22.10.87**

(54) **Dispositif de commande de bus constitué par plusieurs segments isolables.**

(30) Priorité : **23.10.86 FR 8614717**

(43) Date de publication de la demande :
**25.05.88 Bulletin 88/21**

(45) Mention de la délivrance du brevet :
**20.02.91 Bulletin 91/08**

(84) Etats contractants désignés :
**DE FR GB IT NL SE**

(56) Documents cités :
**FR-A- 2 403 600**
**US-A- 4 296 469**

(56) Documents cités :
**PATENT ABSTRACTS OF JAPAN, vol. 7, no. 35
(P-175)[1180], 10 février 1983; & JP-A-57 187
726 (MATSUSHITA DENKI SANGYO K.K.) 18
-11-1982**

(73) Titulaire : **BULL S.A.
121, Avenue de Malakoff
F-75116 Paris (FR)**

(72) Inventeur : **Schoellkopf, Jean-Pierre
1, place Condorcet
F-38000 Grenoble (FR)**
Inventeur : **Boyer Chammard, Yann
18 rue de la Saussière
F-92100 Boulogne Billancourt (FR)**

**Description**

L'invention concerne un dispositif permettant de commander la mise en communication de plusieurs segments de bus isolables électriquement. Chaque segment étant relié généralement aux bornes de sortie de circuits pouvant émettre ou recevoir des informations numériques, la mise en communication de deux ou plusieurs segments permet alors des échanges d'informations entre les circuits d'un des segments et les circuits d'un autre segment (voir US-A-4296469 par exemple).

Des bus pouvant être subdivisés en plusieurs segments trouvent une application intéressante notamment dans les unités de traitement des ordinateurs. En effet, pour pouvoir faire travailler simultanément et indépendamment plusieurs sous-ensembles fonctionnels de l'unité, il est nécessaire de pouvoir isoler les circuits de ces sous-ensembles. D'autre part, on doit pouvoir également mettre en communication deux sous-ensembles fonctionnels entre eux. Comme exemple de sous-ensembles, on peut citer les opérateurs, les registres ou les bancs de registres. Pour résoudre le problème précédent une solution consiste à prévoir des moyens permettant d'isoler à volonté des segments du bus, chaque segment étant relié aux circuits constituant un sous-ensemble fonctionnel.

Pour réaliser des bus constitués par plusieurs segments isolables, on utilise des interrupteurs commandés, un interrupteur reliant deux lignes homologues de deux segments adjacents. Ces interrupteurs sont commandés par des signaux de sélection issus de l'unité de commande de l'ordinateur. L'état logique des signaux de sélection définit ainsi une certaine configuration du bus. Plusieurs segments pourront être mis en série alors que d'autres seront totalement isolés.

La réalisation de tels bus ne présente pas de grande difficulté lorsque le nombre de segments est relativement faible. Par contre si l'on veut augmenter les possibilités de parallélisme, il est souhaitable de disposer de bus pouvant être subdivisés en de nombreux segments indépendants. Il faut pouvoir aussi mettre en communication deux ou plusieurs segments quelconques, ce qui peut conduire à une situation où la capacité totale du bus est très élevée. Il convient alors d'utiliser des moyens permettant de maintenir à un niveau suffisant sur toute la longueur du bus les tensions des signaux transmis. Pour cela chaque segment du bus est associé à des moyens d'amplification qui sont activés chaque fois que le segment travaille en émission, en transmission ou en réception.

Il convient alors de prévoir aussi des moyens de commande, notamment des dispositifs d'amplification, permettant un fonctionnement correct de cet ensemble. En particulier l'activation de l'amplificateur associé à un segment doit être retardée par rapport à celle du segment adjacent par lequel vient l'information. En effet, si l'on négligeait cette contrainte, on risquerait de créer un état d'instabilité pouvant conduire à un fonctionnement anarchique des amplificateurs.

Ainsi l'invention propose un dispositif de commande d'un tel bus selon lequel l'activation de l'amplificateur d'un segment quelconque est asservi à l'activation de l'amplificateur de celui des segments adjacents qui a déjà été activé.

Plus précisément l'invention a pour objet un dispositif de commande de bus constitué par plusieurs segments isolables, permettant le transfert d'informations d'un segment à un autre, deux segments adjacents étant reliés entre eux par des interrupteurs commandés par un signal de sélection, un dispositif d'amplification commandé par un signal d'activation étant associé à chaque segment du bus pour amplifier les tensions apparaissant sur les lignes dudit segment, ledit dispositif de commande étant caractérisé en ce qu'il comprend des moyens d'asservissement pour activer l'amplificateur d'un segment quelconque en réponse à l'activation de l'amplificateur d'un segment adjacent audit segment et au signal de sélection des interrupteurs reliant ledit segment audit segment adjacent.

Les sous-ensembles fonctionnels connectés à un segment de bus peuvent être des éléments utilisés en lecture seule comme par exemple des opérateurs ou bien des éléments pouvant travailler en lecture ou en écriture, comme par exemple des registres. Ainsi un bus constitué par plusieurs segments doit pouvoir véhiculer des informations de façon bidirectionnelle. Il convient donc que le dispositif de commande des interrupteurs et des amplificateurs permette ce fonctionnement bidirectionnel.

Le dispositif de commande est enfin conçu pour pouvoir être déclenché lors de la sélection en lecture d'un segment quelconque du bus.

Aussi l'invention propose également un mode de réalisation du dispositif de commande qui permet de satisfaire à ces contraintes.

L'invention concerne également une réalisation modulaire du dispositif de commande, chaque module étant associé à un segment du bus. Plus précisément, chaque module comprend une ligne de commande préchargée dont la décharge active l'amplificateur du segment de bus associé, la décharge de cette ligne pouvant être commandée par la décharge d'une ligne de commande associée à l'un des segments adjacents.

Outre sa simplicité, cette solution présente l'avantage que l'on peut facilement connecter à la ligne de commande des moyens de décharge additionnels commandés par d'autres signaux et réaliser ainsi une fonction OU logique. En particulier, ce moyen de décharge supplémentaire peut être activé en réponse à un signal de commande de lecture de l'un des circuits relié au segment associé à la ligne, permettant ainsi de déclencher le fonctionnement de la commande.

Enfin l'invention propose une réalisation très simple utilisant la technologie CMOS.

Ces détails de réalisation ainsi que d'autres caractéristiques apparaîtront dans le mode de réalisation préférentiel décrit dans la description qui va suivre :

La figure 1 représente schématiquement un dispositif de commande selon l'invention associé à trois segments de bus.

La figure 2 représente un mode de réalisation d'un module faisant partie du dispositif de commande selon l'invention.

La figure 3 représente une réalisation en technologie CMOS d'un dispositif de transfert faisant partie du dispositif représenté à la figure 2.

La figure 4 représente une réalisation d'un circuit de sélection et d'activation faisant partie du dispositif de commande selon l'invention.

La figure 5 représente des chronogrammes permettant d'expliquer le fonctionnement du dispositif de commande selon l'invention.

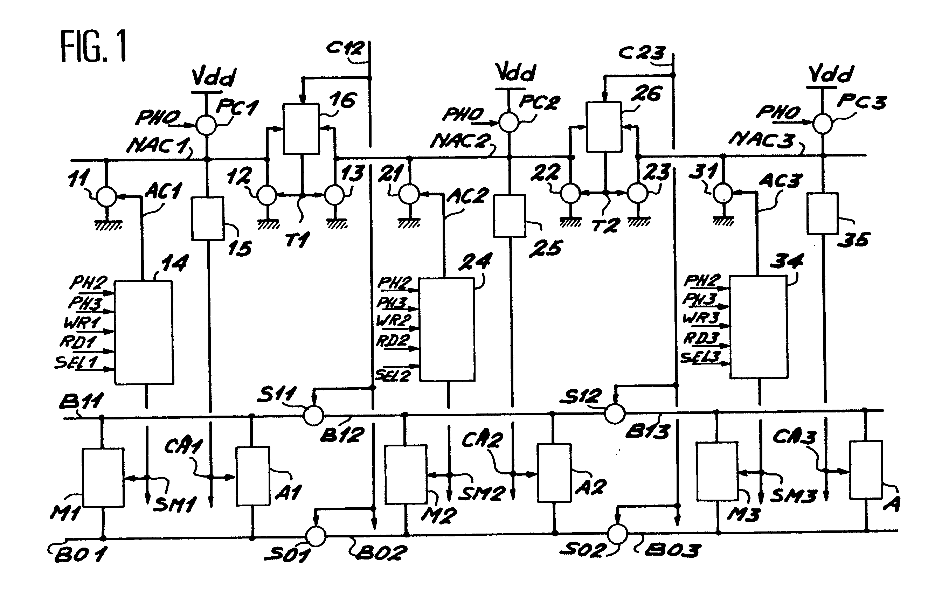

La figure 1 montre trois segments d'un bus dont seulement deux lignes de bit ont été représentées pour des raisons de clarté. Les lignes de bit B01, B11 appartiennent au premier segment, les lignes de bit B02, B12 appartiennent au second segment et les lignes de bit B03, B13 appartiennent au troisième segment. La partie du bus qui a été représentée correspond à un seul bit d'une information numérique pouvant comprendre d'autres bits associés d'autres lignes de bit non représentées. Chaque paire de lignes de bit telle que B01, B11 est connectée aux lignes de sortie d'un ou plusieurs circuits binaires tels que M1 pouvant être par exemple un point mémoire ou le circuit de sortie associé à un seul bit d'un opérateur. De même les circuits binaires M2 et M3 sont connectés respectivement à une paire de lignes de bit du second et du troisième segment de bus. Il est bien entendu que plusieurs circuits binaires peuvent être connectés aux mêmes lignes d'un même segment. Ce sera par exemple le cas pour un banc de registre associé à un même segment. Chaque circuit binaire tel que M1, M2, M3 est mis en communication avec les lignes de bit correspondantes par l'action d'un signal de sélection SM1, SM2, SM3 issu d'un circuit de sélection et d'activation 14, 24, 34 en réponse à des signaux de présélection et de commande SEL1-SEL3, RD1-RD3, WR1-WR3, PH2, PH3.

Chaque paire de lignes de bit est reliée à un dispositif d'amplification A1, A2, A3 commandé par un signal d'activation, respectivement CA1, CA2, CA3. Ces dispositifs d'amplification peuvent être des amplificateurs de lecture classiques couramment utilisés dans la technique des mémoires par exemple.

Chaque ligne de bit d' un segment est reliée à la ligne de bit homologue appartenant à un segment adjacent par l'intermédiaire d'un interrupteur S01, S11, S02, S12. Pour un bus véhiculant les informations de plusieurs bits, on placera ainsi autant d'interrupteurs que le bus a de lignes. Tous les interrupteurs situés entre deux segments adjacents sont commandés par un même signal de sélection C12, C23 qui, pour une valeur logique déterminée, met ces interrupteurs à l'état fermé.

Les trois segments de bus sont associés respectivement aux lignes de commande NAC1, NAC2, NAC3. Chacune des lignes de commande est reliée à l'entrée d'un circuit d'amplification 15, 25, 35 dont la sortie délivre le signal d'activation CA1, CA2, CA3 de l'amplificateur correspondant. Grâce à cette disposition, la tension présente sur une des lignes de commande détermine l'activation de l'amplicateur du segment associé à cette ligne. Dans la perspective d'une réalisation en technologie CMOS, c'est en fait la décharge de la ligne qui entraîne l'activation de l'amplificateur correspondant. Ainsi pour déclencher l'amplification, il suffira de prévoir des moyens pour décharger la ligne initialement préchargée à une tension positive.

Par exemple la ligne NAC2 associée au second segment est reliée à la masse par l'intermédiaire d'un interrupteur 13. Cet interrupteur est commandé par le signal de sortie T1 d'un dispositif de transfert 16 recevant en entrée le signal de sélection C12 des interrupteurs placés entre les deux premiers segments. Le dispositif de transfert est également relié en entrée aux deux lignes de commande NAC1 et NAC2 associées aux deux premiers segments. Le dispositif de transfert 16 est conçu de sorte que le signal T1 qu'il délivre rende conducteur l'interrupteur 13 lorsque l'une quelconque des lignes NAC1, NAC2 est déchargée, à condition que le signal de sélection C12 ait la valeur logique qui correspond à la mise à l'état passant des interrupteurs qu'il commande.

D'autre part, la ligne de commande NAC1 du premier segment est reliée également à un interrupteur 12 commandé également par le signal de sortie T1 du dispositif de transfert 16.

De façon analogue, la ligne de commande NAC3 associée au troisième segment est reliée à un interrupteur 23 commandé par un autre dispositif de transfert 26 recevant le signal de sélection des interrupteurs placé entre le second et le troisième segment. Le signal de sortie T2 du dispositif de transfert 26 est appliqué à l'entrée de commande de l'interrupteur 23. De même, la deuxième ligne de commande est reliée à un autre interrupteur 22 commandé par le signal T2.

Les lignes de commande NAC1, NAC2, NAC3 sont en outre reliées à une source de tension d'alimentation Vdd par l'intermédiaire d'interrupteur PC1, PC2, PC3. Chacun de ces interrupteurs est commandé par un signal d'horloge PH0.

Enfin, les trois lignes de commande NAC1, NAC2, NAC3 sont reliées à la masse par l'intermédiaire d'interrupteurs supplémentaires respectivement 11, 21, 31 commandés respectivement par les signaux AC1, AC2, AC3 issus respectivement des circuits 14, 24, 34. Ces circuits de sélection et d'activation 14, 24, 34 sont conçus de sorte qu'ils délivrent un signal commandant la fermeture de l'interrupteur 11, 21, 31 correspondant lorsqu'un signal de commande de lecture RD1, RD2, RD3 est présent à leur entrée. Cette disposition permet de déclencher le fonctionnement du dispositif de commande dès qu'un segment est sélectionné en lecture.

Bien que la figure 1 ne représente que trois segments de bus, il est évident que la réalisation décrite peut être généralisée pour un nombre quelconque de segments. Pour cela, il suffira de reproduire pour chaque segment les éléments qui ont été décrits par exemple pour le second segment B02, B12 représenté à la figure 1 : une ligne de commande NAC2, un moyen de décharge 22 de cette ligne, un dispositif de transfert 26 commandant ce moyen de décharge 22, un moyen de décharge 23 de la ligne adjacente, le moyen de précharge PC2 et éventuellement des moyens supplémentaires de décharge 21 prévu dans le cas où les circuits binaires connectés au segment sont susceptibles d'être lus. Ainsi les moyens de commande du bus ont une structure modulaire déduite de la structure du bus lui-même. Le module de commande peut ainsi constituer une cellule standard intégrée dans un système de CAO (Conception Assistée par Ordinateur).

Nous allons maintenant décrire le fonctionnement du dispositif de commande de la figure 1. Nous nous placerons à titre d'illustration dans le cas particulier du transfert d'une information issue d'un circuit du premier segment vers le troisième segment où cette information doit être mémorisée. Le dispositif fonctionne en deux phases au moins dont l'une correspond à une phase de précharge définie par un signal d'horloge PH0. Cette phase a pour but de charger les lignes de commandes à une tension positive Vdd. Par ailleurs, selon l'exemple choisi, les signaux de commande de lecture RD1 et de sélection SEL1 du premier segment sont appliqués au circuit de sélection et d'activation 14. De même les signaux de sélection C12 et C23 des interrupteurs sont actifs. Lors de la phase de lecture définie par un second signal d'horloge PH2, le circuit 14 délivre d'une part le signal de sélection SM1 de l'un des circuits du premier segment et d'autre part le signal de commande AC1 de l'interrupteur de décharge 11 de la ligne de commande NAC1 associée à ce segment. Il en résulte que le circuit M1 est mis en communication avec les lignes de bits B01, B11.

D'autre part la ligne de commande NAC1 se décharge par l'intermédiaire de l'interrupteur 11. Cette décharge actionne le circuit d'amplification 15 qui délivre en sortie un signal d'activation CA1 du dispositif d'amplification A1. Par ailleurs, la décharge de la ligne de commande est détectée par le dispositif de transfert 16 validé par le signal de sélection C12. Le dispositif de transfert provoque alors l'activation de l'interrupteur 13 de la ligne adjacente NAC2 provoquant la décharge de cette ligne. De façon analogue cette décharge provoque l'activation de l'amplificateur A2 du second segment de bus. De même le dispositif de transfert 26 validé par le signal C23 provoque l'activation de l'interrupteur 23 de la ligne de commande suivante NAC3 ce qui provoque l'activation de l'amplificateur A3 du troisième segment.

D'après cet exemple, l'information issue du premier segment devant être écrite dans l'un des circuits M3 du troisième segment, le signal de commande d'écriture WR3 est appliqué au circuit d'activation et de sélection 34 ainsi que le signal de présélection SEL3 du circuit M3. Lorsque le signal d'horloge PH3 définissant la phase d'écriture est actif, le circuit 34 délivre le signal de sélection SM3 au circuit M3 sélectionné. Ce circuit M3 est alors mis en communication avec les lignes B03, B13 dont les tensions sont à des niveaux permettant l'écriture, grâce à l'action des trois amplificateurs A1, A2, A3.

Le fonctionnement décrit précédemment dans un cas particulier se généralise facilement. En particulier, on peut augmenter le nombre de segments intermédiaires placés entre le premier et le dernier segment. Il est possible également de commander en écriture plusieurs segments simultanément. Enfin le dispositif peut fonctionner de façon bidirectionnelle. Il peut également commander le transfert d'informations de part et d'autre du segment commandé en lecture.

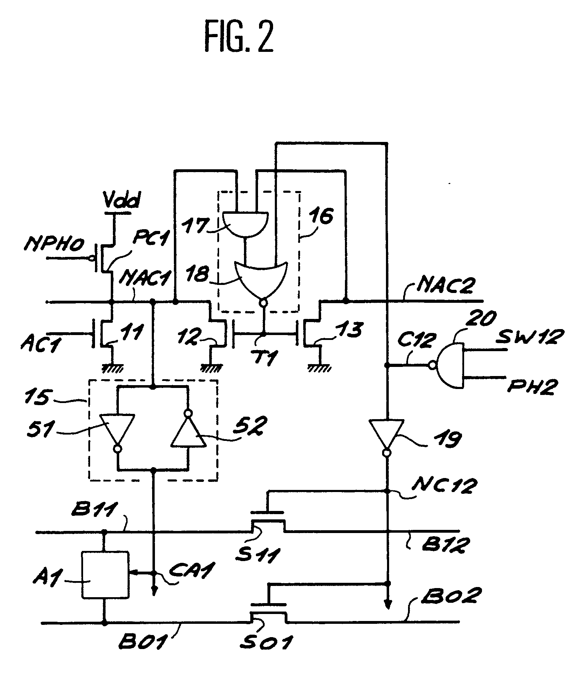

La figure 2 représente une réalisation plus détaillée des circuits mentionnés en référence à la figure 1. Nous retrouvons sur cette figure les deux lignes de bit B01, B11 du premier segment auxquelles est relié le dispositif d'amplification A1. Ce segment est relié à un segment adjacent par l'intermédiaire de transistors NMOS, S01, S11. Le chemin drain-source de chacun de ces transistors est connecté en série avec les deux lignes homologues des deux segments adjacents. Ainsi le transistor S01 relie la ligne B01 du premier segment à la ligne B02 du second segment. De même le transistor S11 relie la ligne B11 à la ligne B12. Cette disposition est reproduite autant de fois que les mots d'information contiennent de bits.

La ligne de commande NAC1 est reliée au drain d'un transistor PC1 de type PMOS (les transistors MOS à canal p sont symbolisés par un petit rond placé sur leur grille), dont la source est reliée à la tension d'alimentation Vdd. La grille de ce transistor reçoit le signal complémentaire NPH0 du signal d'horloge PH0. Ce transistor PC1 constitue le moyen de précharge de la ligne de commande.

La ligne de commande NAC1 est également reliée au drain d'un transistor 12 du type NMOS dont la source est reliée à la masse. De même la ligne de commande adjacente NAC2 est reliée au drain d'un autre transistor 13 de type NMOS ayant sa source reliée à la masse. Les deux transistors 12 et 13 constituent les moyens de décharge respectivement des lignes NAC1 et NAC2. Les grilles de ces transistors reçoivent le signal de sortie T1 du dispositif de transfert 16. Ce dispositif est constitué par une porte ET 17 dont les deux entrées sont reliées respectivement aux deux lignes de commande NAC1, NAC2. La sortie de cette porte ET est reliée à une entrée d'une porte NON-OU 18 dont la sortie fournit le signal T1. La seconde entrée de la porte 18 reçoit le signal C12 issu de la porte NON-ET 20. Cette porte reçoit en entrée le signal d'horloge PH2 définissant la phase de lecture et le signal SW12 commandant la mise en série du premier et du second segment. Le signal C12 est également appliqué à l'entrée d'un inverseur de puissance 19 dont la sortie est reliée aux grilles des transistors tels que S01, S11 reliant les deux segments adjacents.

La ligne de commande NAC1 est reliée à l'entrée d'un circuit d'amplification 15 comprenant un inverseur de puissance 51 dont la sortie fournit le signal d'activation CA1 de l'amplificateur A1. La sortie de cet inverseur est également reliée à l'entrée d'un second inverseur 52 dont la sortie est reliée à l'entrée du premier inverseur 51. Ces deux inverseurs constituent une bascule ayant la double fonction d'amplification du signal NAC1 et de maintien de la tension présente sur la ligne de commande NAC1.

La ligne de commande NAC1 est en outre reliée au drain d'un transistor 11 de type NMOS dont la source est reliée à la masse. La grille de ce transistor reçoit le signal AC1 issu du circuit 14. Ce dernier transistor 11 constitue les seconds moyens de décharge décrits à la figure 1.

Nous allons maintenant décrire le fonctionnement du circuit représenté à la figure 2 en utilisant la convention de la logique positive. Comme précédemment, nous nous placerons dans le cas où l'on veut transférer des informations à partir du premier segment vers le segment adjacent placé à la droite de la figure. Dans ce cas, le signal SW12 prend la valeur 1 logique, ce qui correspond à une présélection de la fermeture des interrupteurs reliant les deux segments adjacents.

Durant la phase de précharge, le signal d'horloge PH0 prend la valeur 1 logique et le signal complémentaire NPH0 prend la valeur 0. Il en résulte que le transistor PC1 de type p est rendu conducteur durant cette phase. La ligne NAC1 se charge alors à une tension positive Vdd. On peut noter que toutes les lignes de commande du bus se chargeront de la même façon.

Lors de la phase de lecture, le signal d'horloge PH2 prend la valeur 1 logique et le signal de sortie de la porte 20 prend la valeur 0 logique tandis que la tension de sortie NC12 de l'inverseur de puissance 19 devient positive rendant passant les transistors S01, S11. Le premier segment étant commandé en lecture, le signal AC1 prendra la valeur 1 logique durant cette phase. Le transistor 11 sera alors conducteur, déchargeant ainsi la ligne NAC1. La décharge de cette ligne aura deux conséquences : d'une part la sortie de l'inverseur de puissance 51 prendra la valeur 1 logique activant ainsi l'amplificateur A1 du segment ; d'autre part la sortie de la porte ET 17 prendra la valeur 0 logique et la sortie T1 de la porte NON-OU 18 prendra une tension positive rendant ainsi conducteur le transistor de décharge 13 de la ligne NAC2.

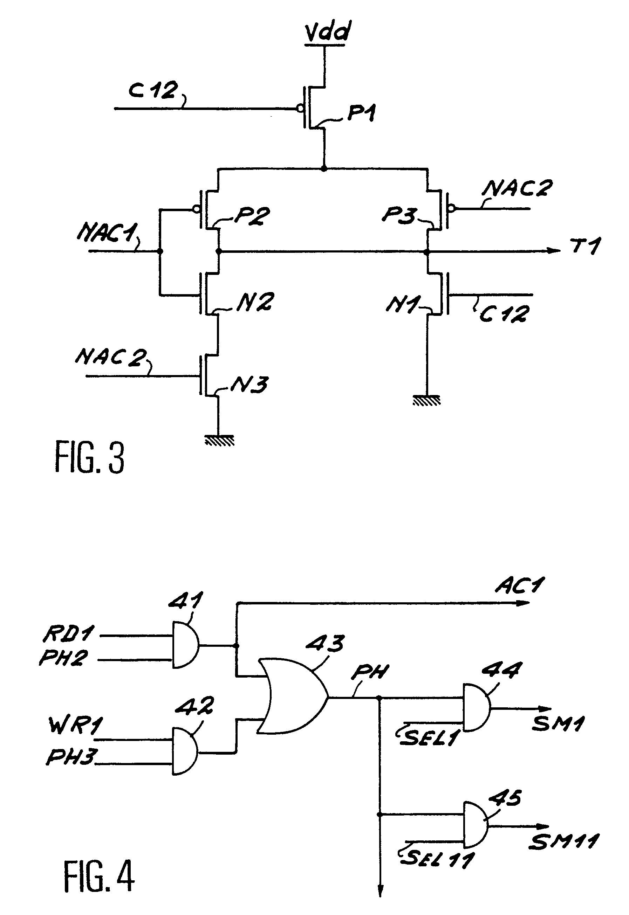

La figure 3 représente un mode de réalisation en technologie CMOS du dispositif de transfert 16. Un premier transistor P1 de type PMOS dont la source est reliée à la tension d'alimentation Vdd reçoit sur sa grille le signal de sélection C12. Son drain est relié aux sources de deux autres transistors P2,P3 de type PMOS dont les grilles sont reliées respectivement aux deux lignes de commande NAC1 et NAC2. Les drains des deux transistors P2,P3 sont reliés entre eux, constituant ainsi la sortie T1 du dispositif. Ce point est relié ensuite au drain d'un quatrième transistor N1 de type NMOS dont la source est reliée à la masse et dont la grille reçoit le signal C12. Ce même point commun est relié également au drain d'un cinquième transistor du type NMOS dont la grille reçoit le signal NAC1 et dont la source est reliée au drain d'un sixième transistor N3 de type NMOS dont la grille reçoit le signal NAC2 et dont la source est reliée à la masse.

Le fonctionnement de ce circuit est évident et il ne sera donc pas exposé. Il est facile de vérifier que la tension de sortie T1 prend une valeur positive si l'un quelconque des signaux NAC1 et NAC2 a une tension nulle et si le signal C12 a également une tension nulle.

La figure 4 représente un mode de réalisation de l'un quelconque des circuits de sélection et d'activation 14, 24, 34 représenté à la figure 1. Ce circuit comporte une première porte ET 41 dont les deux entrées reçoivent respectivement le signal de commande de lecture RD1 du segment de bus associé à ce circuit. L'autre entrée de la porte ET 41 reçoit le signal d'horloge PH2 définissant la phase de lecture. La sortie de cette porte ET 41 délivre le signal AC1 commandant la décharge de l'interrupteur 11. Un signal de commande d'écriture WR et le signal d'horloge PH3 définissant la phase d'écriture sont appliqués à l'entrée d'une seconde porte ET 42. Les sorties des deux portes ET 41, 42 sont reliées à l'entrée d'une porte OU 43. La sortie PH de la porte OU 43 est appliquée à une entrée d'une troisième porte ET 44 à deux entrées, dont la seconde entrée reçoit le signal SEL1 de présélection de l'un des circuits du segment concerné. La sortie de la porte ET 44 délivre le signal SM1 de sélection de ce circuit. La figure 4 représente également à titre d'exemple une quatrième porte ET 45 à deux entrées recevant respectivement les signaux PH et SEL11 de présélection d'un second circuit du segment. La porte ET 45 délivre le signal SM11 de sélection de ce circuit. Des portes ET supplémentaires branchées de la même façon peuvent être prévues dans le cas où le segment de bus serait relié à d'autres circuits sélectionnables séparément, comme c'est le cas pour un banc de registres.

Le circuit de la figure 4 fonctionne de la façon suivante. Dans le cas d'une commande de lecture ou d'écriture l'un des signaux de présélection SEL1, SEL11... prend la valeur 1 logique. S'il s'agit d'une lecture le signal de commande de lecture RD1 a la valeur 1 logique et le signal AC1 prend cette même valeur 1 logique durant la phase de lecture PH2. De même le signal PH aura la valeur 1 logique et l'un des signaux de sélection SM1, SM11... du circuit présélectionné prendra cette même valeur durant la phase PH2. Si par contre il s'agit d'une écriture, le signal WR1 aura la valeur 1 logique, la sortie de la porte ET 42 prenant cette même valeur 1 durant la phase d'écriture PH3. Il en résultera la mise à 1 durant cette phase PH3 de l'un des signaux de sélection SM1, SM11... du circuit présélectionné pour l'écriture. Le signal AC1 conservera la valeur 0 logique.

Nous constatons que ce circuit permet bien l'activation des seconds moyens de décharge 11 de la ligne de commande NAC1 associé au segment de bus sur lequel a été sélectionné en lecture l'un de ces circuits. Par contre, lors d'une écriture dans l'un des circuits de ce segment du bus, la ligne de commande associée n'est pas déchargée sous l'action du signal AC1. D'autre part, la sélection effective de l'un des circuits du segment aura lieu durant la phase de lecture PH2 si le signal de commande de lecture RD1 est actif et durant la phase d'écriture PH3 si le signal de commande d'écriture WR1 est actif.

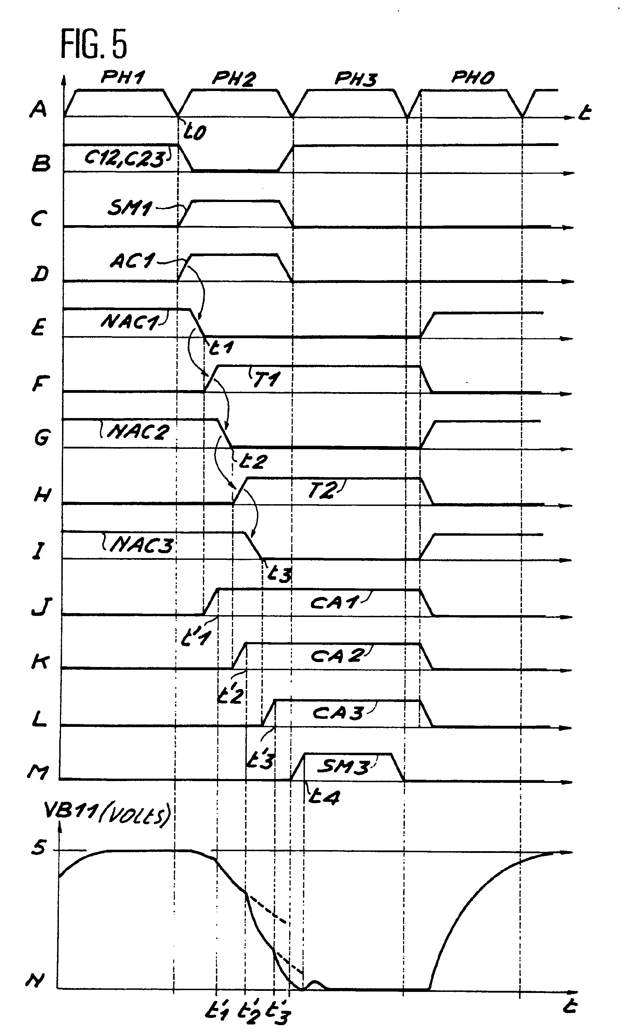

La figure 5 représente les chronogrammes des principaux signaux intervenant dans le dispositif de commande selon l'invention dans le cas particulier déjà mentionné où trois segments de bus seraient impliqués pour effectuer le transfert d'information entre le premier segment sélectionné en lecture et le troisième segment sélectionné en écriture.

Le chronogramme A représente les signaux définissant les quatre phases d'horloge PH0, PH1, PH2, PH3 servant au séquencement de l'unité centrale d'un ordinateur. La phase PH2 est consacré aux opérations de lecture, la phase PH3 aux opérations d'écriture et les phases PH0, PH1 définissent des phases de précharge et d'égalisation des tensions des lignes du bus.

Le chronogramme B représente les signaux de sélection C12 et C23 appliqué aux interrupteurs reliant respectivement le premier segment au second segment et le second segment au troisième segment.

Le chronogramme C représente le signal SM1 de sélection de l'un des circuits du premier segment.

Le chronogramme D représente le signal AC1 commandant l'interrupteur de décharge 11 de la ligne NAC1.

Les chronogrammes E, G et I représentent respectivement les tensions présentes sur les trois lignes de commande NAC1, NAC2 et NAC3. Les chronogrammes F et H représentent respectivement les signaux de commande T1 et T2 issus des dispositifs de transfert 16 et 26.

Les chronogrammes J, K et L représentent respectivement les signaux de commande CA1, CA2 et CA3 appliqués au trois amplificateurs A1, A2, A3 des trois segments impliqués.

Le chronogramme M représente le signal de sélection SM3 appliqué à l'un des circuits M3 du troisième segment de bus.

Le chronogramme N représente les variations en fonction du temps de la tension présente sur l'une des lignes de bit du premier segment. Ce chronogramme correspond au cas où les lignes de bit sont normalement préchargées à une tension de cinq volts alors que la valeur binaire lue impose que la tension de cette ligne corresponde à une tension nulle.

La phase de lecture PH2 débute à l'instant t0 et à cet instant les lignes de bit et les lignes de commande sont préchargées à la tension d'alimentation. Durant la phase PH2, les signaux de sélection C12 et C23 sont maintenus à la valeur 0 logique alors que les signaux SM1 et AC1 gardent la valeur 1 logique. La mise à 1 du signal AC1 provoque la décharge de la ligne de commande NAC1 qui, après un léger retard dû à la constante de temps de cette ligne, passe à la valeur 0 logique à l'instant t1. Ceci entraîne la mise à 1 logique du signal CA1 à l'instant t'1. De même le signal T1 apparaissant à la sortie du dispositif de transfert 16 passe à la valeur 1 logique et ce signal entraîne la décharge de la ligne NAC2 à l'instant t2, après un retard dû à la constante de temps de cette ligne. La décharge de la ligne NAC2 provoque à son tour la mise à 1 logique à l'instant t'2 du signal CA2 de commande de l'amplificateur du deuxième segment. Cette décharge provoque également la mise à 1 logique du signal T2 présent à la sortie du second dispositif de transfert 26. Le signal T2 provoque alors la décharge de la ligne de commande NAC3 qui prend alors la valeur 0 logique à l'instant t3. Cette décharge provoque alors la mise à 1 du signal CA3 qui active alors l'amplificateur de ce troisième segment.

La tension représentée sur le chronogramme N reflète les activations successives des trois amplificateurs A1, A2, A3 respectivement aux instants t'1, t'2, t'3.

Durant la phase d'écriture PH3, le signal de sélection SM3 de l'un des circuits du troisième segment prend la valeur 1 logique permettant ainsi l'écriture dans ce circuit, durant cette phase.

Lors de la phase PH0, les interrupteurs de précharge PC1, PC2, PC3 sont fermés, ce qui provoque la mise à 1 logique de toutes les lignes de commande du bus. Il en résulte que les signaux T1 et T2 sont remis à zéro ainsi que les signaux de commande des amplificateurs CA1, CA2, CA3. Les amplificateurs correspondants A1, A2, A3 sont alors désactivés, ce qui permet alors la précharge des lignes du bus.

Le fonctionnement du dispositif de commande décrit précédemment à titre d'illustration montre que l'activation des amplificateurs se fait successivement par une propagation des signaux de commande accompagnant la propagation de l'information transmise par les différents segments de bus.

On constate également que seuls les amplificateurs des segments servant au transfert de l'information sont actifs, ce qui permet d'éviter une consommation inutile des amplificateurs associés aux segments qui ne sont pas impliqués par ce transfert.

Il convient toutefois de noter que la capacité des lignes de commande doit être suffisante pour introduire des constantes de temps introduisant un retard approprié entre l'activation de deux amplificateurs successifs pour leur laisser un temps d'amplification suffisant. Dans le cas d'une réalisation en technologie CMOS, la capacité des lignes de commande peut être facilement calculée et obtenue en dimensionnant les capacités de structure des transistors MOS utilisés.

Il faut enfin signaler que le retard entre les activations de deux amplificateurs voisins représenté sur les chronogrammes de la figure 5 est exagéré par rapport à la réalité pour des raisons de clarté de la figure. En fait l'intervalle de temps entre deux activations est beaucoup plus faible que la durée de la phase d'horloge PH2. En pratique il sera donc possible de relier un grand nombre de segment de bus, tout en étant sûr que tous les amplificateurs auront été activés pendant l'intervalle de temps défini par les deux phases PH2 et PH3.

**Revendications**

1. Dispositif de commande de bus constitué par plusieurs segments isolables, permettant le transfert d'informations d'un segment à un autre, deux segments adjacents étant reliés entre eux par des interrupteurs (S01, S11, S02, S12) commandés par un signal de sélection (C12, C23), un dispositif d'amplification (A1, A2, A3) commandé par un signal d'activation (CA1, CA2, CA3) étant associé à chaque segment du bus pour amplifier les tensions apparaissant sur les lignes (B01, B11, B02, B12, B03, B13) dudit segment, ledit dispositif de commande étant caractérisé en ce qu'il comprend des moyens d'asservissement (12, 13, 16, 22, 23, 26) pour activer l'amplificateur d'un segment quelconque en réponse à l'activation de l'amplificateur d'un segment adjacent audit segment et au signal de sélection (C12, C23) des interrupteurs reliant ledit segment audit segment adjacent.

2. Dispositif de commande selon la revendication précédente caractérisé en ce qu'il comprend des moyens de déclenchement (14, 11, 24, 21, 24, 31) associés à au moins un des segments du bus pour activer l'amplificateur (A1, A2, A3) associé audit segment en réponse à un signal de commande de lecture (RD1, RD2, RD3) du ou de l'un des circuits reliés audit segment.

3. Dispositif de commande selon la revendication précédente caractérisé en ce que lesdits moyens d'asservissement comprennent des lignes de commande (NAC1, NAC2, NAC3), chaque ligne de commande (NAC2) étant affectée à un des segments du bus, des moyens de précharge (PC2) étant prévus pour précharger ladite ligne à une tension déterminée pendant une phase de précharge, des premiers moyens de décharge (13) de ladite ligne étant commandé par un dispositif de transfert (16) sensible à la tension de la ligne de commande (NAC1) affectée à un segment adjacent audit segment et au signal de sélection (C12) des interrupteurs reliant ledit segment audit segment adjacent, la décharge d'une ligne (NAC1, NAC2, NAC3) provoquant l'activation du dispositif d'amplification (A1, A2, A3) du segment associé.

4. Dispositif de commande selon la revendication précédente caractérisé en ce que lesdits premiers moyens de décharge d'une ligne de commande (NAC2) comprennent au moins un transistor de décharge (13) du type à effet de champs à canal n, dont la source est reliée à la masse, dont le drain est relié à ladite ligne de commande (NAC2) et dont la grille reçoit le signal de sortie (T1) d'un dispositif de transfert (16).

5. Dispositif de commande selon la revendication précédente caractérisé en ce que le dispositif de transfert (16) associé à deux segments adjacents est constitué par une porte ET (17) à deux entrées reliées respectivement aux deux lignes de commande (NAC1, NAC2) affectées aux deux segments adjacents, la sortie de la porte ET (17) étant reliée à une entrée d'une porte NON - OU (18) dont l'autre entrée reçoit un signal complémentaire (C12) prenant la valeur "1" logique lorsque le signal de sélection (NC12) commande en fermeture les interrupteurs reliant les deux segments adjacents, la sortie (T1) de la porte NON-OU (18) étant reliée aux grilles de deux transistors de décharge (12, 13) affectés respectivement aux deux lignes de commande.

6. Dispositif de commande selon l'une des revendications 3 à 5 caractérisé en ce que les moyens de déclenchement associés à l'un des segments de bus sont constitués par un circuit d'activation (14, 24, 34, 41) recevant le signal de commande de lecture (RD1, RD2, RD3) et dont la sortie (AC1, AC2, AC3) est appliquée à l'entrée de commande de seconds moyens de décharge (11, 21, 31) de la ligne de commande (NAC1, NAC2, NAC3) affectée audit segment.

7. Dispositif de commande selon la revendication précédente caractérisé en ce que les seconds moyens de décharge sont consitués par un transistor de décharge (11, 21, 31) du type à effet de champs à canal n, dont la source est reliée à la masse, dont le drain est relié à la ligne de commande (NAC1, NAC2, NAC3) et dont la grille est reliée à la sortie (AC1, AC2, AC3) du circuit d'activation (14, 24, 34, 41).

8. Dispositif de commande selon l'une des revendications 3 à 7 caractérisé en ce que lesdits moyens de précharge (PC1) sont constitués par un transistor de précharge du type à effet de champs à canal p, dont la source est reliée à une source de tension d'alimentation positive (Vdd), dont le drain est relié à la ligne de commande (NAC1, NAC2, NAC3) et dont la grille reçoit un signal (NPH0) rendant conducteur ledit transistor de précharge pendant la phase de précharge.

9. Dispositif de commande selon la revendication précédente caractérisé en ce que la ligne de commande (NAC1, NAC2, NAC3) affecté à un segment de bus est reliée à l'entrée d'un inverseur de puissance (51) dont la sortie fournit le signal d'activation (CA1, CA2, CA3) du dispositif d'amplification (A1, A2, A3) dudit segment, un second inverseur (52) ayant son entrée et sa sortie reliées respectivement à la sortie et à l'entrée dudit inverseur de puissance (51).

10. Dispositif de commande selon l'une des revendications précédente caractérisé en ce que les interrupteurs (S01, S11, S02, S12) reliant deux segments adjacent sont constitués par autant de transistors à effet de champs à canal n que le bus a de lignes, le chemin drain-source d'un transistor étant branché en série avec les deux lignes homologues des segments adjacents, les grilles desdits transistors recevant le signal de sélection (NC12).

**Ansprüche**

1. Vorrichtung zur Bussteuerung, wobei der Bus aus mehreren, trennbaren Segmenten besteht und die Überführung von Informationen von einem Segment zu einem anderen Segment ermöglicht, wobei zwei nebeneinanderliegende Segmente durch Schalter (S01, S11, S02, S12) miteinander verbunden sind, die durch ein Selektionssignal (C12, C23) gesteuert sind, wobei eine Verstärkervorrichtung (A1, A2, A3), welche durch ein Aktivierungssignal (CA1, CA2, CA3) gesteuert wird, jedem Segment des Busses zugeordnet ist, um die an den Leitungen (B01, B11, B02, B12, B03, B13) des Segments auftretenden Spannungen zu verstärken, wobei die genannte Steuervorrichtung dadurch gekennzeichnet ist, daß sie Regelmittel (12, 13, 16, 22, 23, 26) umfaßt, um den Verstärker eines beliebigen Segments als Antwort auf die Aktivierung des Verstärkers eines dem genannten Segment benachbarten Segments sowie auf das Selektionssignal (C12, C23) der Schalter, die das genannte Segment mit dem genannten benachbarten Segment verbinden, zu aktivieren.

2. Steuervorrichtung nach dem vorstehenden Anspruch, dadurch gekennzeichnet, daß sie Auslösemittel (14, 11, 24, 21, 34, 31) umfaßt, die wenigstens einem der Segmente des Busses zugeordnet sind, um den dem Segment zugeordneten Verstärker (A1, A2, A3) als Antwort auf ein Signal zur Steuerung des Auslesens (RD1, RD2, RD3) der mit dem genannten Segment verbundenen Schaltung bzw. Schaltungen zu aktivieren.

3. Steuervorrichtung nach dem vorstehenden Anspruch, dadurch gekennzeichnet, daß die genannten Regelmittel Steuerleitungen (NAC1, NAC2, NAC3) umfasen, wobei jede Steuerleitung einem der Segmente des Busses zugewiesen ist, Vorlademittel (PC2) vorgesehen sind, um die genannte Leitung während einer Vorladephase auf eine vorbestimmte Spannung vorzuladen, wobei erste Mittel (13) zur Entladung der genannten Leitung über eine Übertragungsvorrichtung (16) gesteuert sind, welche für die Spannung der Steuerleitung (NAC1), die einem dem genannten Segment benachbarten Segment sowie dem Selektionssignal (C12) der Schalter zugewiesen ist, die das genannte Segment mit dem genannten benachbarten Segment verbindet, empfindlich ist, wobei die Entladung einer Leitung (NAC1, NAC2, NAC3) die Aktivierung der Vorrichtung zum Verstärken (A1, A2, A3) des zugeordneten Segments verursacht.

4. Steuervorrichtung nach dem vorstehenden Anspruch, dadurch gekennzeichnet, daß die ersten Mittel zum Entladen einer Steuerleitung (NAC2) wenigstens einen Entladetransistor (13) vom n-Kanal-Feldeffekttyp aufweisen, dessen Source mit der Masse verbunden ist, dessen Drain mit der genannten Steuerleitung (NAC2) verbunden ist und dessen Gate das Ausgangssignal (T1) einer Überführ-Vorrichtung (16) empfängt.

5. Steuervorrichtung nach dem vorstehenden Anspruch, dadurch gekennzeichnet, daß die Überführvorrichtung (16), die den beiden benachbarten Segmenten zugeordnet ist, aus einem AND-Gate (17) mit zwei Eingängen besteht, die jeweils mit den beiden Steuerleitungen (NAC1, NAC2), die den beiden benachbarten Segmenten zugewiesen sind, verbunden sind, wobei der Ausgang des AND-Gates (17) mit einem Eingang eines NOR-Gates (18) verbunden ist, dessen anderer Eingang ein Komplementärsignal (C12) empfängt, der den logischen Wert "1" annimmt, wenn das Selektionssignal (NC12) das Schließen der die beiden benachbarten Segmente verbindenden Schalter steuert, wobei der Ausgang (T1) der NOR-Gates (18) mit den Gates zweier Entlade-Transistoren (12, 13) verbunden ist, die jeweils den beiden Steuerleitungen zugewiesen sind.

6. Steuervorrichtung nach einem der Ansprüche 3 bis 5, dadurch gekennzeichnet, daß die einem der Segmente des Busses zugeordneten Auslösemittel aus einer Aktivierungsschaltung (14, 24, 34, 41) bestehen, die das Signal zur Steuerung des Auslesens (RD1, RD2, RD3) empfängt, und dessen Ausgang (AC1, AC2, AC3) an den Eingang zur Steuerung der zweiten Entlademittel (11, 21, 31) der dem genannten Segment zugewiesenen Steuerleitung (NAC1, NAC2, NAC3) angelegt ist.

7. Steuervorrichtung nach dem vorstehenden Anspruch, dadurch gekennzeichnet, daß die zweiten Entlademittel aus einem Entladetransistor vom n-Kanal-Feldeffekttyp bestehen, dessen Source mit der Masse verbunden ist, dessen Drain mit der Steuerleitung (NAC1, NAC2, NAC3) verbunden ist und dessen Gate mit dem Ausgang (AC1, AC2, AC3) der Aktivierungsschaltung (14, 24, 34, 41) verbunden ist.

8. Steuervorrichtung nach einem der Ansprüche 3 bis 7, dadurch gekennzeichnet, daß die genannten Vorlademittel (PC1) aus einem Vorladetransistor vom Typ mit p-Kanal-Feldeffekttyp bestehen, dessen Source mit einer Spannungsquelle mit positiven Versorgung (Vdd) verbunden ist, dessen Drain mit der Steuerleitung (NAC1, NAC2, NAC3) verbunden ist und dessen Gate ein Signal (NPHO) empfängt, das den genannten Vorladetransistor während der Vorladephase leitend macht.

9. Steuervorrichtung nach dem vorstehenden Anspruch, dadurch gekennzeichnet, daß die Steuerleitung (NAC1, NAC2, NAC3), die einem Segment des Busses zugewiesen ist, mit dem Eingang eines Leistungswandlers (51) verbunden ist, dessen Ausgang das Aktivierungssignal (CA1, CA2, CA3) der Verstärkungsvorrichtung (A1, A2, A3) des genannten Segments abgibt, wobei der Eingang sowie der Ausgang eines zweiten Umsetzers (52) mit dem jeweiligen Ausgang sowie mit dem Eingang des genannten Leistungsumsetzers (51) verbunden sind.

10. Steuervorrichtung nach einem der vorstehenden Ansprüche, dadurch gekennzeichnet, daß die zwei benachbarte Segmente miteinander verbindenden Schalter (S01, S11, S02, S12) aus soviel n-Kanal-Feldeffekttransistoren bestehen wie der Bus Leitungen hat, wobei die Drain-Source-Strecke eines Transistors mit den beiden homologen Leitungen der benachbarten Segmente in Reihe geschaltet ist und die Gates der genannten Transistoren das Selektionssignal (NC12) empfangen.

## Claims

1. A bus control device comprising a plurality of isolatable segments, permitting the transfer of data from one segment to another, two adjacent segments being connected to one another via switches (S01, S11, S02, S12) controlled by a selection signal (C12, C23), an amplification device (A1, A2, A3) controlled by an actuation signal (CA1, CA2, CA3) being associated with each bus segment for amplifying the voltages appearing on the lines (B01, B11, B02, B13, B03, B13) of said segment, said control device being characterized in that it includes servocontrol means (12, 13, 16, 22, 23, 26) for actuating the amplifier of any one segment in response to the actuation of the amplifier of a segment adjacent to said one segment and to the selection signal (C12, C23) for the switches connecting said segment to said adjacent segment.

2. A control device according to the preceding claim, characterized in that it includes triggering means (14, 11, 24, 21, 34, 31) associated with at least one of the bus segments for actuating the amplifier (A1, A2, A3) associated with said segment in response to a reading control signal (RD1, RD2, RD3) of the circuit or one of the circuits connected to said segment.

3. A control device according to the preceding claim, characterized in the said servocontrol means include control lines (NAC1, NAC2, NAC3), each control line (NAC2) being assigned to one of the bus segments, pre-charging means (PC2) being provided for pre-charging said line to a predetermined voltage during a pre-charging phase, first means (13) for discharging said line being controlled by a transfer device (16) responsive to the voltage of the control line (NAC1) assigned to a segment adjacent to said segment and to the selection signal (C12) of the switches connecting said segment with said adjacent segment, the discharge of a line (NAC1, NAC2, NAC3) causing the actuation of the amplification device (A1, A2, A3) of the associated segment.

4. A control device according to the preceding claim, characterized in that said first means for discharging a control line (NAC2) include at least one discharge transistor (13) of the n-channel field effect type, the source of which is connected to ground, the drain of which is connected to said control line (NAC2), and the gate of which receives the output signal (T1) of a transfer device (16).

5. A control device according to the preceding claim, characterized in that the transfer device (16) associated with two adjacent segments comprises an AND gate (17) having two inputs connected respectively to the two control lines (NAC1, NAC2) assigned to the two adjacent segments, the output of the AND gate (17) being connected to one input of a NOR gate (18) the other input of which receives a complementary signal (C12) assuming the value of logic "1" when the selection signal (NC12) controls the closing of the switches connecting the two adjacent segments, the output (T1) of the NOR gate (18) being connected to the gates of two discharge transistors (12, 13) assigned respectively to the two control lines.

6. A control device according to one of claims 3 to 5, characterized in that the triggering means associated with one of the bus segments comprise an actuation circuit (14, 24, 34, 41) receiving the reading control signal (RD1, RD2, RD3) and the output of which (AC1, AC2, AC3) is applied to the control input of second means (11, 21, 31) for discharging the control line (NAC1, NAC2, NAC3) assigned to said segment.

7. A control device according to the preceding claim, characterized in that the second discharge means comprise a discharge transistor (11, 21, 31) of the n-channel field effect type, the source of which is connected to ground, the drain of which is connected to the control line (NAC1, NAC2, NAC3) and the gate of which is connected to the output (AC1, AC2, AC3) of the actuation circuit (14, 24, 34, 41).

8. A control device according to one of claims 3 to 7, characterized in that said pre-charge means (PC1) comprise a pre-charge transistor of the p-channel field effect type, the source of which is connected to a source of positive supply voltage (Vdd), the drain of which is connected to the control line (NAC1, NAC2, NAC3) and the gate of which receives a signal (NPH0) rendering said pre-charge transistor conductive during the pre-charge phase.

9. A control device according to the preceding claim, characterized in that the control line (NAC1, NAC2, NAC3) assigned to a bus segment is connected to the input of a power inverter (51), the output of which supplies the actuation signal (CA1, CA2, CA3) of the amplification device (A1, A2, A3) of said segment, a second inverter (52) having its input and its output connected respectively to the output and input of said power inverter (51).

10. A control device according to one of the preceding claims, characterized in that the switches (S01, S11, S02, S12) connecting two adjacent segments comprise as many n-channel field effect transistors as the bus has lines, the drain-source path of a transistor being connected in series with the two homologous lines of the adjacent segments, the gates of said transistors receiving the selection signal (NC12).

FIG. 1

# FIG. 2

FIG. 3

FIG. 4

FIG. 5